# EUROPEAN PATENT APPLICATION

(11) **EP 4 686 634 A1**
(43) Date of publication of application: **04.02.2026**
(21) Application number: 25190352.2
(22) Date of filing: 18.07.2025
(51) Int. Cl.: B60W 50/14, B60W 10/08, B60W 10/10

(54) **CONTROL SYSTEM AND METHOD FOR CONTROLLING AT LEAST ONE FUNCTIONALITY OF A VEHICLE AND VEHICLE**

(30) Priority: 29.07.2024 IT 202400017572
(71) Applicant: IVECO S.P.A., 10156 Torino (IT)
(72) Inventor: MIROLO, Efrem, 10156 TORINO (IT)
(74) Representative: Studio Torta S.p.A.

(57) **Abstract**

A control system (20) for the control of a vehicle (10) functionality. The control system (20) includes: target means (12) controllable to implement said functionality of the vehicle (10); a control unit (14); sensor means (18), to acquire sensor data indicative of parameters or states of the vehicle (10), of a driver and/or of the surrounding environment; and interface means (16), operable by the driver to acquire an override command from the user. The control unit (14) is configured to: receive the sensor data; determine, on the basis of the sensor data, a first suggested control action for the control of the target means (12); inform the driver; in response to the information, receive, when present, the override command indicative of an override of the first suggested control action; and in the absence of the override command, control the target means (12) according to the first suggested control action, or, in the presence of the override command, inhibit the control of the target means (12).

## Description

### CROSS-REFERENCE TO RELATED APPLICATIONS

This patent application claims priority from Italian patent application no. 102024000017572 filed on July 29, 2024, the entire disclosure of which is incorporated herein by reference.

### TECHNICAL SECTOR

This invention relates to a simplified control of functionalities of a vehicle. Specifically, this invention relates to a control system for simplified control of one or more functionalities of a vehicle (e.g., gear selection or automatic parking), to a vehicle comprising the control system (in particular, an electric vehicle) and to a corresponding control method.

This invention finds its preferred, though not exclusive or limiting, application in light vehicles (preferably cars or vans) or heavy vehicles (preferably trucks or buses).

### BACKGROUND OF THE INVENTION

As is known, vehicles have several functionalities that normally have to be controlled manually by the driver in order to be operated and used.

For example, the driver must manually operate the shift selector to select the vehicle's direction of motion and the gear to be engaged, or must manually park the vehicle.

All this requires intervention and commitment from the driver.

In recent vehicles, particularly electric and assisted or autonomous driving ones, driver intervention in the vehicle is increasingly reduced.

For example, in electric vehicles there is a shift selector, for example a lever, a set of buttons or a knob, which the driver can operate to select the vehicle's direction of travel in a simplified manner, to automatically perform a parking manoeuvre, etc. This, however, requires the presence of complex and cumbersome interface and control systems for the shift selector (for example in terms of electronic control circuitry, wired electrical connections, etc.). In addition, these interface and control systems must be certified to ensure the safe driving of the vehicle, and in any case can fail or be operated incorrectly, so that they risk causing road accidents.

In addition, known systems continue to require driver intervention in various situations, which makes the driving experience less pleasant, comfortable and safe.

In addition, driver controls are often provided by operating levers or multiple, different, closely spaced buttons. This makes it difficult and less safe for the driver to control the vehicle in certain situations, for example when the driver wears gloves during door-to-door goods delivery, which requires frequent and close vehicle stops.

The purpose of this invention is to provide a control system, a vehicle and a control method that overcome the drawbacks of the prior art.

### SUMMARY OF THE INVENTION

The purpose of this invention is to meet the above requirements.

The above-mentioned purpose is achieved with a control system, a vehicle and a control method, as defined in the attached claims, which form an integral part of this description.

### BRIEF DESCRIPTION OF THE DRAWINGS

In order to better understand this invention, a non-limiting preferred embodiment thereof will now be described by way of example with reference to the accompanying drawings, in which:
- Figure 1 is a schematic side view of a vehicle comprising a control system in accordance with an embodiment of this invention;
- Figure 2 is a perspective view of a dashboard of the vehicle in Figure 1, in accordance with an embodiment of this invention;
- Figure 3 is a schematic view from above of a vehicle driving situation in Figure 1, in particular of a situation involving leaving an intersection, according to an embodiment of this invention; and
- Figure 4 is a schematic view from above of a vehicle driving situation in Figure 1, in particular of a situation involving exiting a parking space, according to an embodiment of this invention.

In the following description, elements common to the different embodiments have been indicated with the same reference numbers.

### DETAILED DESCRIPTION OF THE INVENTION

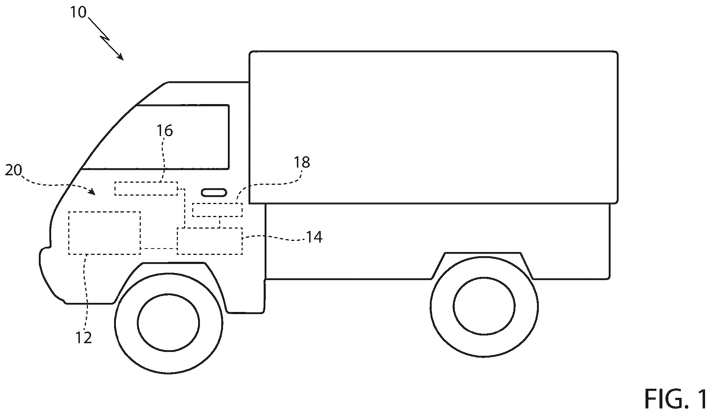

Figure 1 shows a vehicle 10, according to an embodiment of this invention.

In particular, the vehicle 10 is an electric vehicle, such as a Battery Electric Vehicle (BEV).

The vehicle 10 may be a vehicle, in particular a light vehicle (e.g. a car or van) or a heavy vehicle (e.g. a truck or bus).

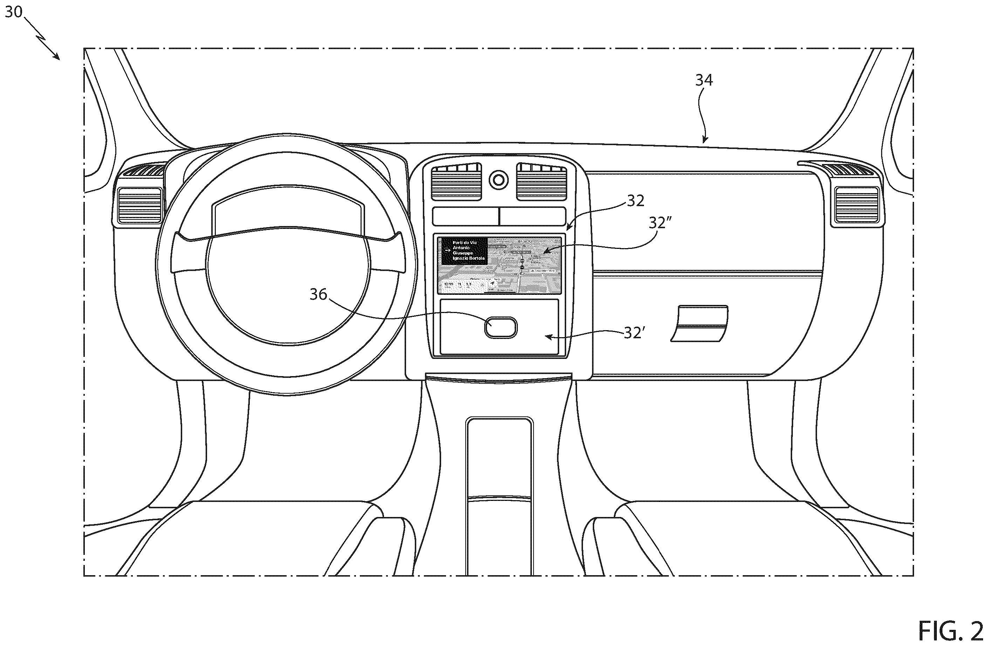

The vehicle 10 has a passenger compartment (or cabin), shown in Figure 2 with reference number 30.

With reference to Figure 1, the vehicle 10 comprises a control system 20 for controlling one or more functionalities (in particular, the driving functionality) of the vehicle 10.

As described in more detail below, these driving functionalities can include, for example, selection of the gear of the vehicle, performing a parking manoeuvre or parking.

The control system 20 includes target means 12, of a known type. The target means 12 comprise means, equipment, systems, devices, installations or other components of the vehicle 10 that are designed to implement the driving functionality that the control system 20 controls.

For example, if the driving functionality concerns the selection of the gear of the vehicle 10 to set the direction of motion of the vehicle 10, the target means 12 include a vehicle 10 shift selector (e.g., an automatic shift selector of the P-R-N-D type). In addition, where the driving functionality relates to the automatic parking of the vehicle 10, the target means 12 include the components of the vehicle 10 that enable this manoeuvre to be performed.

The control system 20 also comprises a control unit 14, operationally coupled to the target means 12 and configured to control the functionalities of the target means 12. The control unit 14 is an electronic control unit (e.g., a processor, dedicated microprocessor or ECU, etc.).

In this embodiment, the control unit 14 is external to the target means 12 and is operationally coupled to them. Nevertheless, other embodiments are possible wherein, for example, the control unit 14 is included in the target means 12.

In addition, the control system 20 also includes sensor means 18, operationally coupled to the control unit 14 and configured to acquire sensor data indicative of parameters or states of the vehicle 10, of the driver and/or of the environment surrounding the vehicle 10.

In use, the control unit 14 receives sensor data via the sensor means 18 and, based on these, controls the operation of the target means 12 as further described below.

In particular, the sensor data are chosen according to the target means 12 to be controlled and, in particular, make it possible to have the information needed to control the driving functionality of interest.

Merely by way of non-limiting example, if the driving functionality concerns the selection of the gear of the vehicle 10 to set the direction of motion of the vehicle 10, the sensor data include one of more of the following pieces of information: current state of the shift selector (e.g. current parking, reverse, neutral mode, etc. of the vehicle 10 shift); any obstacles around the vehicle 10 (e.g. another vehicle present in front of the vehicle 10, a short distance away); road signs; traffic lights; GPS position; obstacle detection in the lane; travel route setting; presence of a "Vulnerable Road User" (VRU); mission type; driver's usual and preferred settings.

By way of non-limiting example only, if the driving functionality relates to the automatic parking of the vehicle 10, the sensor data include one or more of the following pieces of information: any obstacles around the vehicle 10 (e.g., another vehicle present in front of the vehicle 10, a short distance away); available parking space width; road slope; road signs (e.g., horizontal and vertical); presence of a "Vulnerable Road User" (VRU); mission type; driver's usual and preferred settings.

The sensor means 18 comprise vehicle sensors 10 of a known type and configured to acquire the sensor data described above.

By way of non-limiting example only, if the driving functionality relates to the selection of the gear of the vehicle 10 for setting the direction of motion of the vehicle 10, the sensor means 18 may include, for example: shift selector current status sensors; ultrasonic sensors; radar sensors; LIDAR sensors; driver presence sensors; seatbelt status sensors; door closure status sensors; cameras (e.g., interior and exterior); microphones; vehicle 10 speed sensors; steering angle sensors; etc.

By way of non-limiting example only, if the driving functionality relates to the automatic parking of the vehicle 10, the sensor means 18 may include, for example: ultrasonic sensors; radar sensors; LIDAR sensors; driver presence sensors; seatbelt status sensors; door closure status sensors; cameras (e.g., interior and exterior); microphones; vehicle 10 speed sensors; steering angle sensors; inertial sensors.

However, it is evident that other types of sensors can be used to acquire the sensor data.

In addition, the control system 20 also comprises interface means 16, located in the passenger compartment 30 of the vehicle 10 and operationally coupled to the control unit 14.

As further described below, the interface means 16 can be operated by the driver of the vehicle 10 to acquire an override command from the driver. The override command allows the driver to cancel a target means 12 control action that has been automatically determined by the control system 20 based on the sensor data. In other words, the control system 20 suggests the automatically chosen control action for the target means 12 to the driver, but the driver can manually choose to override that control action when they believe it is not correct, appropriate or preferred.

In addition, the interface means 16 can inform the driver of the control action that has been automatically determined and is suggested. This can be done, for example, by visually displaying the suggested control action (e.g., its name, an identification code corresponding to the action, or a schematic drawing of the action), or by generating a corresponding acoustic signal by means of a vehicle 10 speaker.

According to an embodiment shown in Figure 2, the interface means 16 comprise a screen 32 positioned in a dashboard 34 of the vehicle 10. The screen 32 is a touch-screen and, therefore, can be operated by the driver.

In particular, in use, the screen 32 has a first region 32' (e.g., a part of the main window shown by means of the screen 32) in which a command is present that allows the driver to override the control action suggested by the vehicle 10. Specifically, the first region 32' includes a reconfigurable virtual button 36 that the driver can be press to override the control action suggested by the vehicle 10 (including in different modes to provide different commands, for example a shorter press or a longer press).

Other embodiments of the screen 32 can be similarly considered, for example using known smart surfaces. For example, smart surfaces are vehicle 10 dashboard surfaces capable of displaying graphics (albeit simplified) and sensitive to the driver's touch. Other embodiments of the screen 32 can be user interfaces such as "head-up displays", "foldable displays", or 3D holographic displays, etc.

In a known way, the screen 32 may also include additional regions dedicated to other known purposes not forming part of this invention. For example, the screen 32 may also include a second region 32" that shows the driver a map of the surrounding environment of the vehicle 10.

According to a preferred embodiment, the interface means 16 include voice communication means (not shown) and, in particular, a microphone and a vehicle 10 speaker. The driver may provide voice commands to the vehicle 10 using the microphone, in particular commands relating to overriding the control action suggested by the vehicle 10, and may receive information relating to the control action suggested by the vehicle 10 (or new control actions that are suggested by the vehicle 10 in response to the driver overriding the first suggested control action). Specifically, the driver's voice commands are acquired by the control unit 14 via voice recognition, for example through natural language recognition techniques.

According to a different embodiment, the interface means 16 include gestural communication means (not shown) and, in particular, an image capture device of the vehicle 10 (e.g., a camera observing the driver). The driver can provide gesture commands to the vehicle 10 via the image capture device, in particular commands relating to overriding the control action suggested by the vehicle 10. In addition, the driver may receive information regarding the control action suggested by the vehicle 10 (or new control actions that are suggested by the vehicle 10 in response to the driver's overriding the first suggested control action), for example via a vehicle 10 speaker. Specifically, the driver's gesture commands are acquired by the control unit 14 via optical gesture recognition.

According to another embodiment, the interface means 16 comprise a (single) physical button (not shown and of a reconfigurable type) that the driver can press to override the control action suggested by the vehicle 10, in a similar way to the virtual button 36.

In this case too, alternative and similar embodiments can be considered and implemented.

Below, the embodiment of the screen 32 with the virtual button 36 is considered as an example. Nevertheless, other embodiments can be considered as alternatives, as described above.

The control of the target means 12 will now be described in more detail.

In particular, the control unit 14 receives sensor data via the sensor means 18.

Based on the sensor data, the control unit 14 determines a suggested control action.

The suggested control action is the control action that the control system 20 recognises to be optimal, based on the current situation in light of the sensor data, to implement the desired driving functionality.

The determination of the suggested control action can be done in a known way, that is, according to known control logics, for example based on known safety parameters.

For example, the suggested control action can be determined automatically by comparing the sensor data with respective thresholds, for example by means of a "look-up table" that associates values or ranges of the sensor data with respective suggested control actions. For example, the well-known patent US 11,932,230 describes known possible criteria for choosing actions to control the parking of a vehicle.

Thereafter, the control unit 14 informs the driver of the suggested control action, for example via the interface means 16.

Merely by way of non-limiting example, the suggested control action may be shown visually on the screen 32, or it may be presented audibly via a vehicle 10 speaker.

The driver may then choose whether to consent to the suggested control action without the need for further interaction with the vehicle 10, or may choose to override the suggested control action by providing the override command via the interface means 16.

If the drive does not provide an override command, the control unit 14 controls the target means 12 in such a way as to achieve the desired driving functionality.

Specifically, this is done in a known way depending on the specific target means 12 considered, and therefore this is not described in detail here.

For example, if the driving functionality concerns the selection of the gear of the vehicle 10 to set the direction of motion of the vehicle 10, the control unit 14 selects the gear option that corresponds to the suggested control action (e.g., selects reverse driving mode).

If the driver does not accept the suggested control action, the control unit 14 receives the override command via the interface means 16 and controls the target means 12 also based on the override command.

In particular, the control unit 14 may present the driver with a new and different suggested control action, again determined on the basis of the sensor data and alternative to the one initially suggested to the driver.

Specifically, on the basis of the sensor data, the control unit 14 can determine a list of candidate control actions, each correlated with a respective score indicating a degree of approval of the respective candidate control action (that is, a percentage of appropriateness of the candidate control action to achieve the desired driving functionality, in response to the situation that can be deduced from the sensor data). The degrees of approval are also determined autonomously by the control unit 14 depending on the sensor data: higher degrees of approval imply candidate control actions more suitable to respond to the current situation of the vehicle 10, while lower degrees of approval imply candidate control actions less suitable to respond to the current situation of the vehicle 10. The candidate control action with the highest degree of approval is presented to the driver as the first suggested control action. Should the driver then disagree and thus give the override command, the control unit 14 could then present the candidate control action with the second highest degree of approval, which defines the second suggested control action, to the driver for their approval.

Consequently, it is also possible for the driver to override more than one suggested control action.

Alternatively, when an override command is detected for the first suggested control action, the control unit 14 can control the target means 12 directly on the basis of the second suggested control action. This allows the driver to override only one suggested control action for each driving functionality, but reduces the response time of the vehicle 10 to driving situations that may occur.

The control unit 14 can preferably start controlling the target means 12 immediately after determining the suggested control action, that is, without waiting for the driver's possible override command. After that, the control unit 14 interrupts the suggested control action if it receives the override command from the driver. In this way, the response time of the vehicle 10 to driving situations that may occur is reduced.

Consequently, this control of the target means 12 allows a vehicle 10 driving functionality to be obtained automatically and, thus, without disturbing the driver. Nevertheless, should the driver wish to change what is suggested automatically, this is made possible by quickly and easily acting on the interface means 16.

Advantageously, the interface means 16 also allow the driver to manually inspect, manage and vary advanced settings of the target means 12. This can, for example, be done via the screen 32, in particular in a secondary advanced settings screen, or via an application installed on the driver's mobile phone that, in this case, is operationally coupled in use to the control unit 14.

As evident, the actions of the control system 20 described above correspond to respective steps of a control method implemented by the control system 20 to control the target means 12. As these actions have already been described in detail, the control method is not described again here as it is identical to the previous description.

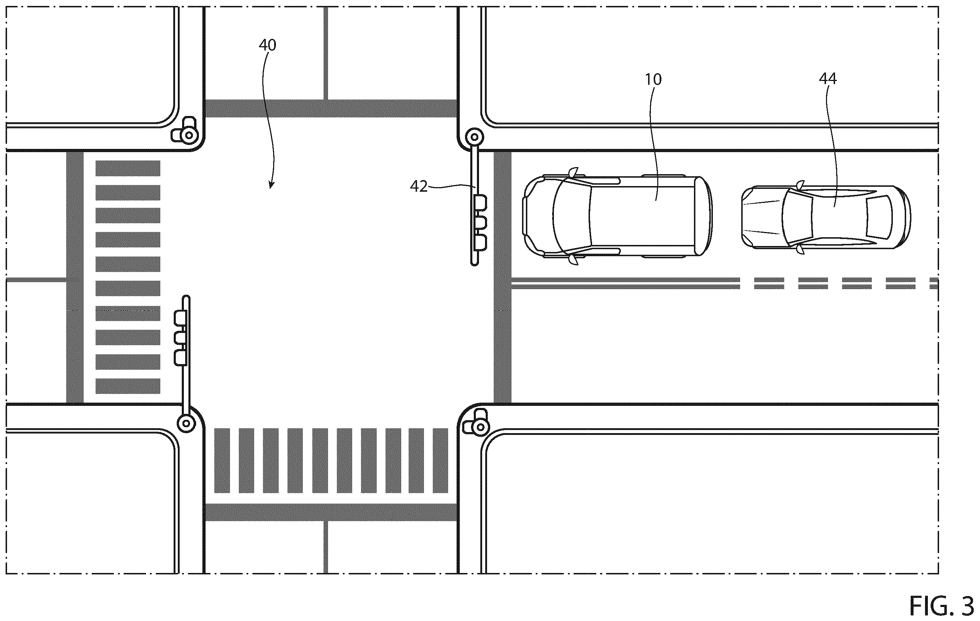

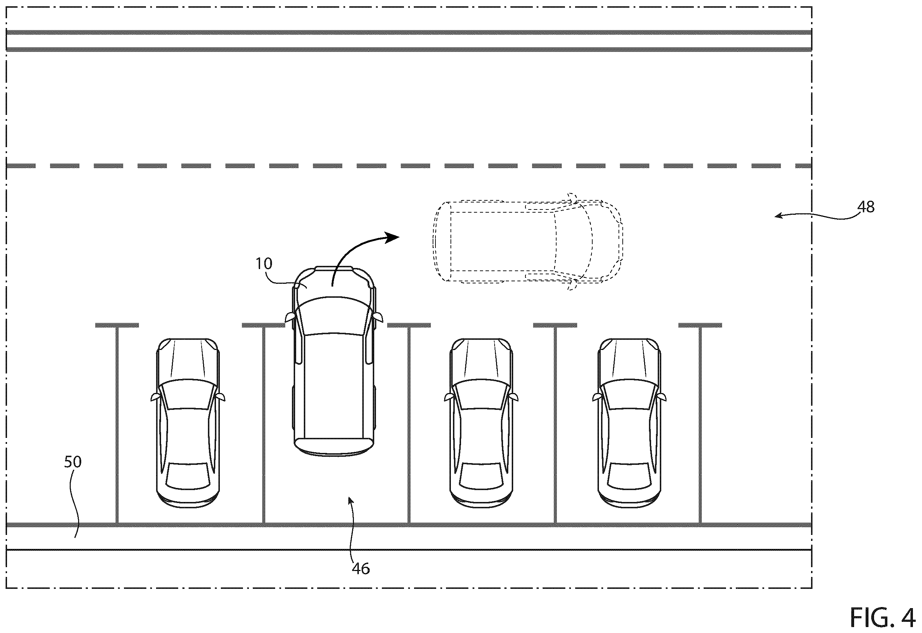

Merely by way of non-limiting example, Figures 3 and 4 show respective driving situations of the vehicle 10 controlled via the control system 20.

For example, Figure 3 shows the case where the vehicle 10 is stopped at an intersection 40 with a red light 42 in front of it. Another vehicle 44 is present behind the vehicle 10, stopped nearby.

In the case of Figure 3, when the driver presses the accelerator, the sensor means 18 detect that the traffic light 42 has turned green, the position on the map is known due to localisation, and if programmed the navigation route is also known, the control system 20 commands the vehicle 10 to cross the intersection 40. Specifically, since the sensor means 18 detect that there are no obstacles in front of the vehicle 10, while behind the vehicle 10 there is the other vehicle 44, the control system 20 commands the vehicle 10 to move forward, consistent with the set route (if any), that is to move away from the vehicle 44.

In contrast, Figure 4 shows the case where the vehicle 10 has to leave a parking space 46 to enter the lane 48. In particular, the parking space 46 is a diagonal one and is interposed between the lane 48 and a wall 50.

In the case of Figure 4, since the sensor means 18 detect that the lane 48 in front of the vehicle 10 is clear of obstacles while the wall 50 is present behind the vehicle 10, the control system 20 commands the vehicle 10 to move forward to enter the lane 48 when the driver presses the accelerator pedal.

In the case of Figure 4, should the driver wish to have the vehicle 10 perform a different action (e.g., stop driving forward and reverse a short distance to better position the vehicle 10 in order to facilitate leaving the parking space), they could provide the override command for the suggested control action, thus forcing the control system to suggest the desired action as the new action to be performed.

The advantages enabled by the discovery according to this invention will be apparent from an examination of the features thereof.

In particular, the control system 20 allows automatic control of the vehicle 10 driving functionalities while still giving the driver the opportunity to override the choice made automatically if it does not conform to the driver's intentions.

This significantly reduces the driver's effort in driving and makes the driving experience easier, faster, safer and less energy consuming.

In addition, this reduces the number of components in the vehicle 10, eliminating many of the command and drive interfaces currently required and reducing the risk of malfunction that can lead to potential road accidents.

Lastly, it is clear that modifications and variations may be made to the invention described and illustrated herein without departing from the scope of this invention, as set forth in the claims.

For example, the different embodiments described can be combined to provide additional solutions.

In addition, other driving functionalities can be controlled using the control system 20. For example, other examples of driving functionalities may be: change of gear of the vehicle 10 while in motion; automatically opening one or more doors of the vehicle 10 (e.g., in response to optical detection of the driver's face by an image capture device located at the driver's door; in this case, the interface means 16 may be arranged outside the vehicle 10, so as to be operated by the driver even when the driver is still outside the passenger compartment 30); automatic power-on of the vehicle 10 when the driver has entered the passenger compartment 30 and has fastened their seat belt; automatic power-off of the vehicle if the driver leaves the vehicle; automatic and temporary braking of the vehicle 10 (for example, in the event of temporary stopping at an intersection with a red light, or in front of the delivery destination during door-to-door goods delivery, or in the event that the driver gets up from the driver's seat to operate or move around inside the vehicle); automatic braking of the vehicle on a sloping road.

In addition, the virtual button 36 described above can also contain information regarding the alternative action that is selected by the driver in the event that they give the override command. For example, if the first suggested action is for the vehicle to move forward, the virtual button 36 may, for example, show an "R" inside it indicating the override command consisting of a reverse command for the vehicle 10, and vice versa. Optionally, the virtual button 36 may show within it both a second suggested action and, to a lesser extent, a third suggested action (e.g., the majority of the surface of the virtual button 36 shows the second suggested action, while a minority of the surface of the virtual button 36 shows the third suggested action); in this case, by means of a shorter press of the virtual button 36 the driver may select the second suggested action, while by means of a longer press of the virtual button 36 the driver may select the third suggested action. In this way, the driver is visually informed via the same virtual button 36 of the second, and possibly even third, suggested action. This is similarly applicable to other embodiments of the interface means 16.

In addition, in contrast to the above and according to a preferred embodiment, the suggested control action can be determined automatically by means of artificial intelligence (AI) or machine learning (ML) techniques.

This can be done by means of known AI and/or ML techniques, for example trained through supervised training. This training makes it possible, for example, to associate values or ranges of the sensor data with respective suggested control actions.

The training is preferably updated in real time based on the sensor data and any override commands. In this way, it is possible to customise the control of the target means 12 to the specific driver, storing the control preferences in association with the conditions that led to them and integrating training with that association.

By way of non-limiting example, the following algorithms or classification techniques may be used: "Naive Bayes" algorithms; "gradient boosted decision trees" (GBDT) algorithms; "Random Forest Classification" algorithms; or Artificial Neural Networks (ANN).

This embodiment based on AI and/or ML techniques is advantageous compared to the above, as it allows for better control of the target means 12, more sensitive to variations in the sensor data and more robust with respect to any inconsistencies or mutual deviations of the latter. In addition, AI and/or ML algorithms are able to evaluate the driver's behaviour when in different situations in order to learn from it (e.g. as in the case in Figure 4), especially when they have to perform a repetitive action (such as exiting/entering and parking in the hub, deliveries made in the same place, etc.).

## Claims

1. Control system (20) for a vehicle (10), for controlling at least one functionality of the vehicle (10),
the control system (20) including:
- target means (12) controllable to implement said functionality of the vehicle (10);
- a control unit (14), operatively coupled to the target means (12) and configured to control the operation of the target means (12);
- sensor means (18), operatively coupled to the control unit (14) and configured to acquire sensor data indicative of parameters or states of the vehicle (10), of a driver of the vehicle (10) and/or of the environment surrounding the vehicle (10); and
- interface means (16), operatively coupled to the control unit (14) and operable by the driver to acquire an override command from the user for the control of the target means (12),
wherein the control unit (14) is configured to:
- receive the sensor data via the sensor means (18);
- determine, on the basis of the sensor data, a first suggested control action for the control of the target means (12) for implementing said functionality of the vehicle (10);
- inform the driver of the first suggested control action;
- in response to the information on the first suggested control action, receive, when present, the override command via the interface means (16), said override command being indicative of an override by the driver of the first suggested control action; and
- in the absence of the override command, control the target means (12) according to the first suggested control action, or, in the presence of the override command, inhibit the control of the target means (12) according to the first suggested control action.

2. Control system according to claim 1, wherein the control unit (14) is configured to determine the first suggested control action via artificial intelligence and/or machine learning algorithms.

3. Control system according to claim 2, wherein the control unit (14) is configured to update a training of the artificial intelligence and/or machine learning algorithms in real time based on the sensor data and the override command.

4. Control system according to any of the previous claims, wherein the control unit (14) is configured to determine the first suggested control action by:
- determining, on the basis of the sensor data, a plurality of candidate control actions, each being correlated to a respective score indicating a respective degree of approval, the degree of approval increasing as the effectiveness of the respective candidate control action in implementing said functionality of the vehicle (10) increases; and
- identifying the candidate control action with the highest level of approval as the first suggested control action.

5. Control system according to any of the previous claims, wherein, in the presence of the override command, the control unit (14) is further configured to:
- determine, on the basis of the sensor data, a second suggested control action for the control of the target means (12) for implementing said functionality of the vehicle (10);
- inform the driver of the second suggested control action;
- in response to the information on the second suggested control action, receive, when present, a new override command via the interface means (16), said new override command being indicative of an override by the driver of the second suggested control action; and
- in the absence of the new override command, control the target means (12) according to the second suggested control action, or, in the presence of the new override command, inhibit the control of the target means (12) according to the second suggested control action.

6. Control system according to any one of claims 1-4, wherein, in the presence of the override command, the control unit (14) is further configured to:
- determine, on the basis of the sensor data, a second suggested control action for the control of the target means (12) for implementing said functionality of the vehicle (10); and
- control the target means (12) according to the second suggested control action.

7. The control system according to claim 4 and one of claims 5 or 6, wherein the second suggested control action is identified, among the plurality of candidate control actions, as the candidate control action with the second higher degree of approval.

8. Control system according to any of the preceding claims, wherein the at least one functionality of the vehicle (10) comprises one or more of the following functionalities: a selection of a gear of the vehicle (10); an automatic parking manoeuvre of the vehicle (10); a change of gear of the vehicle (10); an automatic opening of one or more doors of the vehicle (10); an automatic power-on of the vehicle (10); an automatic power-off of the vehicle (10); an automatic and temporary braking of the vehicle (10).

9. The control system according to claim 8, wherein, in the case in which the functionality includes selecting the gear of the vehicle (10) to set a direction of motion of the vehicle (10), the target means (12) comprise a shift selector of the vehicle (10), or
wherein, in the case in which the driving functionality includes the automatic parking of the vehicle (10), the target means (12) include components of the vehicle (10) adapted to automatically park the vehicle (10).

10. The control system according to claim 8 or 9, wherein, in the case in which the functionality includes the selection of the gear of the vehicle (10), the sensor data comprise one or more of the following pieces of information: current state of the gear selector; obstacles around the vehicle (10); presence of the driver; state of seat belts; locking status of the door of the vehicle (10); speed of the vehicle (10); steering angle of the vehicle (10); road signs; presence of "Vulnerable Road User", VRU; position of the vehicle (10); travel route; driver's usual and preferred driving settings; mission of the vehicle (10), or
wherein, in the case in which the driving functionality includes automatic parking of the vehicle (10), the sensor data include one or more of the following pieces of information: obstacles around the vehicle (10); parking space width; road slope; presence of the driver; state of seat belts; locking status of the doors of the vehicle (10); speed of the vehicle (10); steering angle of the vehicle (10); road signs; presence of "Vulnerable Road User", VRU; position of the vehicle (10); driver's usual and preferred driving settings.

11. The control system according to any one of the preceding claims, wherein the interface means (16) are further configured to inform the driver of the first suggested control action.

12. Control system according to any of the previous claims, wherein the interface means (16) comprise a screen (32), of the touch-screen type, or an intelligent surface, operable by the driver.

13. The control system of claim 12, wherein the screen (32) is configured to present a virtual button (36) configured to be pressed by the driver to provide the override command.

14. The control system according to any one of claims 1-11, wherein the interface means (16) comprise voice communication means including a microphone configured to acquire the driver's override command via voice recognition.

15. Vehicle (10) comprising a control system (20), according to any one of the preceding claims.

16. Vehicle according to claim 15, of the electric type.

17. Control method for controlling at least one functionality of a vehicle (10),
the control method being performed by a control system (20) comprising:
- target means (12) controllable to implement said functionality of the vehicle (10);
- a control unit (14), operatively coupled to the target means (12) and configured to control the operation of the target means (12);
- sensor means (18), operatively coupled to the control unit (14) and configured to acquire sensor data indicative of parameters or states of the vehicle (10), of a driver of the vehicle (10) and/or of the environment surrounding the vehicle (10); and
- interface means (16), operatively coupled to the control unit (14) and operable by the driver to acquire an override command from the user for the control of the target means (12),
wherein the control method includes the steps of:
- receiving, by the control unit (14), the sensor data via the sensor means (18);
- determining, by the control unit (14) and on the basis of the sensor data, a first control action suggested for the control of the target means (12) for implementing said functionality of the vehicle (10);
- informing, by the control unit (14), the driver of the first suggested control action;
- in response to the information on the first suggested control action, receiving, by the control unit (14), the override command via the interface means (16) when present, said override command being indicative of an override by the driver of the first suggested control action; and
- in the absence of the override command, controlling, by the control unit (14), the target means (12) according to the first suggested control action, or, in the presence of the override command, inhibiting, by the control unit (14), the control of the target means (12) according to the first suggested control action.
